# FASCICULE DE BREVET EUROPEEN

(11) **EP 2 029 429 B1**
(45) Date de publication et mention de la délivrance du brevet: **07.10.2009**
(21) Numéro de dépôt: 07788901.2
(22) Date de dépôt: 18.06.2007
(51) Int. Cl.: B64D 27/26, B64D 27/18, B64D 29/06

(54) **CARENAGE POUR MAT DE SUSPENSION D'UN TURBOMOTEUR A UNE AILE D'AERONEF**
VERKLEIDUNG FÜR EINEN MAST ZUR AUFHÄNGUNG EINES TURBINENMOTORS VON EINEM FLUGZEUGFLÜGEL
FAIRING FOR A PYLON VIA WHICH A TURBINE ENGINE IS SUSPENDED FROM A WING OF AN AIRCRAFT

(30) Priorité: 20.06.2006 FR 0605448
(43) Date de publication de la demande: 04.03.2009
(73) Titulaire: AIRBUS OPERATIONS, 31060 Toulouse (FR)
(72) Inventeur: PORTE, Alain, 31770 Colomiers (FR)
(74) Mandataire: Bonnetat, Christian
(86) Numéro de dépôt international: PCT/FR2007/001009
(87) Numéro de publication internationale: WO 2007/147965

(56) Documents cités:
- EP-A1- 0 453 360
- EP-A1- 0 733 545
- FR-A1- 2 102 187
- FR-A1- 2 861 364

## Description

La présente invention concerne un carénage pour mât de suspension d'un turbomoteur à une aile d'aéronef.

On sait que, à des fins aérodynamiques, un mât de suspension de turbomoteur est recouvert d'un carénage. On sait de plus que, généralement, un tel carénage comporte une pièce antérieure qui :
- est disposée en regard de la partie supérieure du carter de la soufflante du turbomoteur,
- présente la forme au moins approximative d'une gouttière renversée taillée en sifflet,
- est latéralement raccordée au capot externe de la soufflante de façon que son extrémité avant vienne affleurer le capot externe de l'entrée d'air du turbomoteur,
- peut servir d'accrochage aux capots de la soufflante, et
- est fixée audit carter de soufflante par une attache avant et par une attache arrière.

Un tel carénage est connu de EP-A1-0733545, qui montre toutes les caractéristiques du préambule de la revendication 1.

Dans les carénages de mâts de suspension connus de ce type, lesdites attaches avant et arrière sont rigides afin de maintenir fermement en place ladite pièce antérieure de carénage sur le moteur. Toutefois, afin de pouvoir absorber les tolérances de fabrication et de montage, il est usuel de réaliser ladite attache arrière sous la forme d'une liaison relativement lâche ou réglable.

On remarquera que cette pièce antérieure de carénage se trouve à l'aplomb des pales de la soufflante. Aussi, lorsqu'une pale de cette roue se brise et vient heurter brutalement le carter de soufflante sous ladite pièce antérieure du carénage, la percussion qui en résulte est transmise à cette dernière principalement par ladite attache avant rigide. Il en résulte que ladite pièce antérieure de carénage est soulevée en tournant autour de l'articulation formée par ladite attache arrière lâche et se déforme de façon irréversible, l'extrémité avant de cette pièce antérieure de carénage se soulevant par rapport au capot externe de l'entrée d'air du turbomoteur. Il en résulte que la pièce antérieure de carénage forme alors une sorte d'écope particulièrement défavorable aux performances de l'aéronef, notamment en ce qui concerne la traînée. De plus, une telle écope pourrait provoquer la perte des capots de soufflante.

La présente invention a pour objet de remédier à cet inconvénient.

A cette fin, selon l'invention, le carénage pour mât de suspension d'un turbomoteur à une aile d'aéronef, ledit turbomoteur comportant :
- une entrée d'air tubulaire, entourée par un capot externe d'entrée d'air ; et
- une soufflante, alimentée en air par ladite entrée d'air et enfermée dans un carter de soufflante, lui-même entouré par un capot externe de soufflante en continuité aérodynamique avec ledit capot externe d'entrée d'air,
et ledit carénage de mât de suspension ayant une pièce antérieure qui :
■ est disposée en regard de la partie supérieure dudit carter de soufflante,
■ présente la forme au moins approximative d'une gouttière renversée taillée en sifflet,
■ est latéralement raccordée audit capot externe de soufflante de façon que son extrémité avant vienne affleurer ledit capot externe d'entrée d'air, et
■ est fixée audit carter de soufflante par une attache avant et par une attache arrière, ladite attache arrière étant relativement lâche pour absorber des tolérances, est remarquable en ce que ladite attache avant est flexible dans la direction au moins approximativement radiale par rapport audit carter de soufflante.

Grâce à une telle flexibilité, les déformations de ladite pièce antérieure de carénage, dues à une percussion par une pale ou par un morceau de pale de la soufflante, sont au moins en partie absorbées par ladite attache avant, de sorte qu'aucune écope ne se forme ou que, tout au plus, seul un léger désaffleurement se produit entre l'extrémité avant de la pièce de carénage antérieure et le capot externe de l'entrée d'air du turbomoteur.

Ladite attache avant flexible peut se présenter sous de nombreuses formes de réalisation telles que bielle à ressort, bielle en une matière élastiquement ou plastiquement déformable, etc ...

Cependant, dans un mode de réalisation préféré, ladite attache avant comporte une plaque de tôle ou de matière analogue, transversale par rapport audit carter de soufflante et à ladite pièce antérieure de carénage, et ladite plaque comporte au moins un pli entre ledit carter de soufflante et ladite pièce avant de carénage.

Ainsi, lors d'une percussion radiale du carter de soufflante depuis l'intérieur vers l'extérieur par une pale ou un morceau de pale, ledit pli assure la flexibilité de l'attache avant et l'absorption de l'énergie de cette percussion, ce qui évite au moins en partie la formation d'une écope.

De façon connue, l'entrée d'air tubulaire du turbomoteur peut comporter une paroi interne définissant avec ledit capot externe d'entrée d'air une chambre obturée, du côté de ladite soufflante, par une cloison arrière annulaire reliant ladite paroi interne et ledit capot externe d'entrée d'air.

Dans ce cas, il est avantageux que ladite cloison arrière présente également une flexibilité radiale. De la sorte, le bord arrière de ladite paroi interne de l'entrée d'air est également apte à absorber au moins en partie l'énergie d'une percussion par une pale ou un morceau de pale de la soufflante.

De préférence, la flexibilité radiale de ladite attache avant et la flexibilité radiale de ladite cloison arrière sont au moins approximativement égales. Ainsi, on obtient des possibilités de déformation homogène pour le bord arrière de la paroi interne de l'entrée d'air tubulaire et pour ladite pièce antérieure de carénage.

Les figures du dessin annexé feront bien comprendre comment l'invention peut être réalisée. Sur ces figures, des références identiques désignent des éléments semblables.
La figure 1 est une vue en coupe longitudinale, schématique et partielle, d'un turbomoteur suspendu à une aile d'aéronef par l'intermédiaire d'un mât caréné.
La figure 2 est une vue en perspective de l'avant d'un turbomoteur pourvu de la pièce antérieure du carénage dudit mât de suspension.
La figure 3 est une vue en perspective de l'avant du turbomoteur de la figure 2, le capot externe de soufflante étant partiellement éliminé.
Les figures 4 et 5 illustrent schématiquement les déformations engendrées par une percussion de pale de soufflante sur le carter de soufflante, lorsque ladite attache avant est rigide.
Les figures 6 et 7 illustrent schématiquement les déformations engendrées par une percussion de pale de soufflante sur le carter de soufflante, lorsque ladite attache avant est radialement flexible.
La figure 8 est une vue en perspective de l'avant de ladite pièce antérieure du carénage du mât de suspension, pourvue d'un mode de réalisation préféré de ladite attache avant.
La figure 9 est une vue en perspective de l'avant partiel, et à plus grande échelle, de ladite pièce antérieure, montrant ladite attache avant.

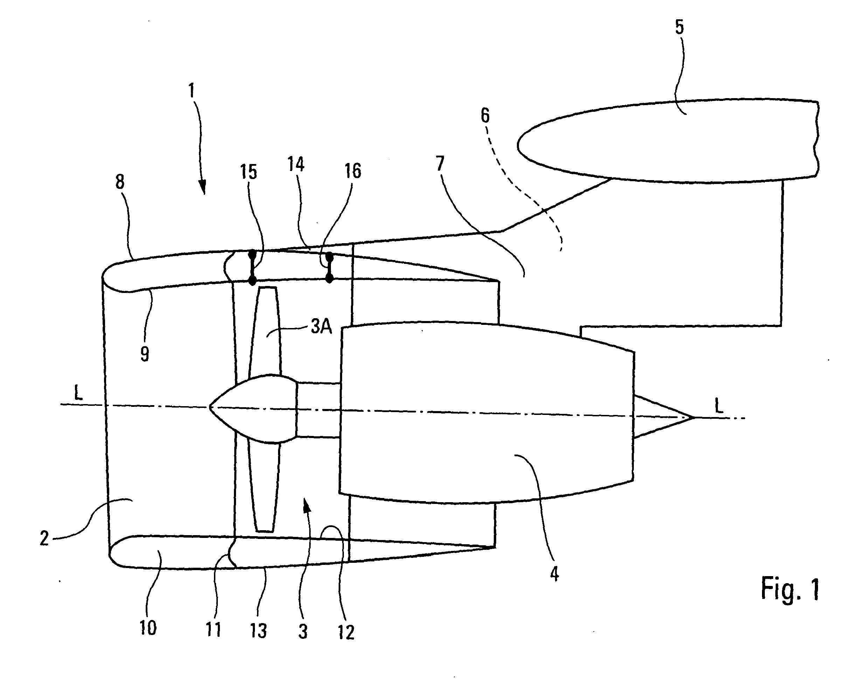

Le turbomoteur 1, représenté schématiquement sur la figure 1, présente un axe longitudinal L-L le long duquel sont répartis, de l'avant vers l'arrière, une entrée d'air tubulaire 2, une soufflante 3 et un générateur d'air chaud 4.

Le turbomoteur 1 est suspendu à une aile d'aéronef 5 par l'intermédiaire d'un mât de suspension 6 recouvert d'un carénage aérodynamique 7.

L'entrée d'air tubulaire 2 est constituée par un capot externe d'entrée d'air 8 et par une paroi interne 9, ledit capot externe 8 et ladite pièce interne 9 délimitant entre eux une chambre 10 obturée en regard de la soufflante 3 par une cloison arrière annulaire 11, reliant ledit capot externe 8 et ladite paroi interne 9.

La soufflante 3, pourvue de pales 3A, est alimentée en air par ladite entrée d'air 2 et elle est enfermée dans un carter tubulaire de soufflante 12, en continuité aérodynamique avec ladite paroi interne 9 de ladite entrée d'air 2. Le carter de soufflante 12 est entouré par un capot externe de soufflante 13, en continuité aérodynamique avec ledit capot externe d'entrée d'air 8.

Le carénage 7 du mât de suspension 6 comporte une pièce antérieure 14 disposée en regard de la partie supérieure du carter de soufflante 12, c'est-à-dire au-dessus de ce dernier, et fixée audit carter de soufflante 12 par une attache avant 15 et par une attache arrière 16.

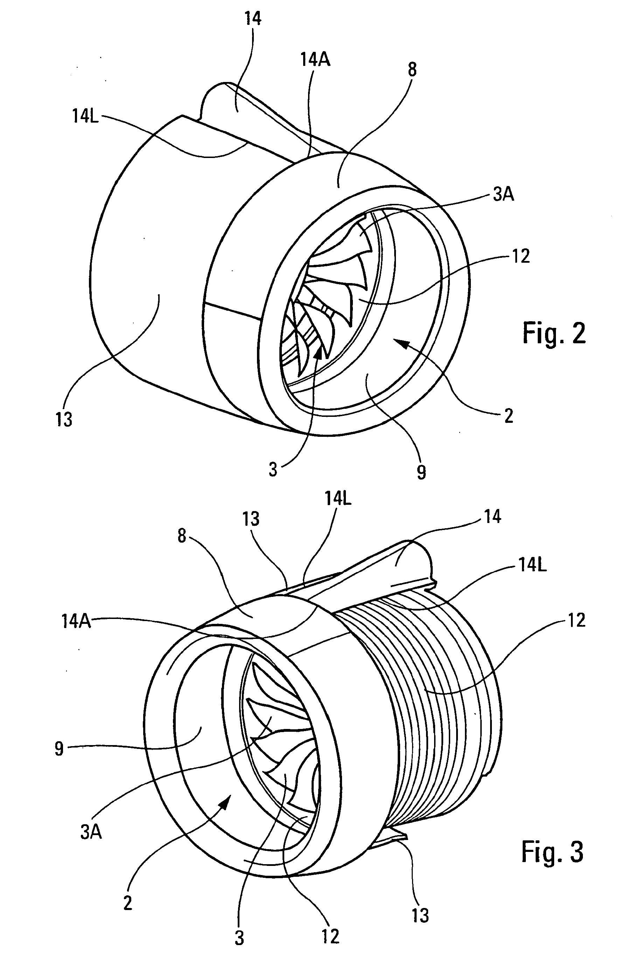

Sur les figures 2 et 3, qui représentent en perspective la partie avant du turbomoteur 1, on peut voir l'entrée d'air tubulaire 2, la soufflante 3 et ses pales 3A, le capot externe d'entrée d'air 8, la paroi interne d'entrée d'air 9, le carter tubulaire de soufflante 12 (voir notamment la figure 3), le capot externe de soufflante 13 (partiellement éliminé de la figure 3) et la pièce antérieure de carénage 14.

Sur ces figures 2 et 3, on peut voir de plus que ladite pièce antérieure de carénage 14 présente la forme au moins approximative d'une gouttière renversée taillée en sifflet, dont les bords latéraux 14L se raccordent audit capot externe de soufflante 13 et dont le bord avant 14A affleure le capot externe d'entrée d'air 8.

Afin de pouvoir absorber des tolérances de fabrication et de montage, l'attache arrière 16, qui peut présenter toute configuration connue, est relativement lâche et permet une rotation limitée de la pièce antérieure de carénage 14 autour d'elle. En revanche, l'attache avant 15 est rigide pour fixer ladite pièce 14 en position.

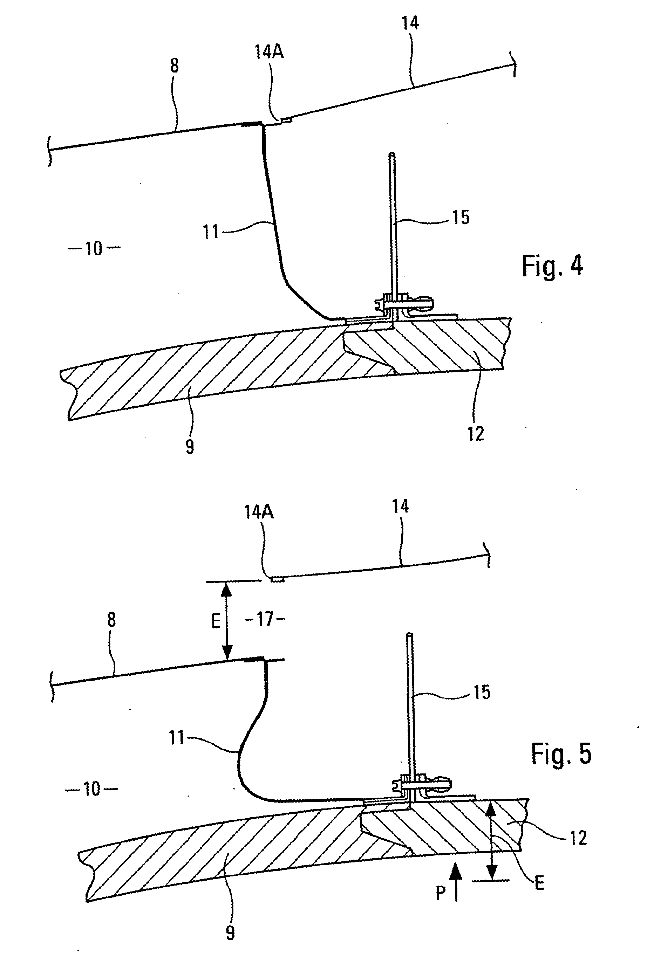

Il résulte de cette disposition que, lorsqu'une pale 3A de la soufflante 3 se brise et vient percuter le carter de soufflante 12 à l'aplomb de la pièce antérieure de carénage 14 (voir la figure 5 sur laquelle la percussion d'une pale 3A est symbolisée par la flèche P), le carter 12 est déformé d'une hauteur importante E et la percussion est transmise intégralement à ladite pièce antérieure de carénage 14 par ladite attache avant rigide 15. Sous l'action de cette percussion, ladite pièce de carénage 14 pivote donc autour de l'attache arrière 16 et se déforme de façon définitive, de sorte qu'il apparaît une large fente 17, de largeur importante correspondant à la hauteur E, entre le bord avant 14A de la pièce de carénage 14 et le capot externe d'entrée d'air 8. La pièce de carénage 14 se comporte donc alors en vol comme une écope (voir la figure 5).

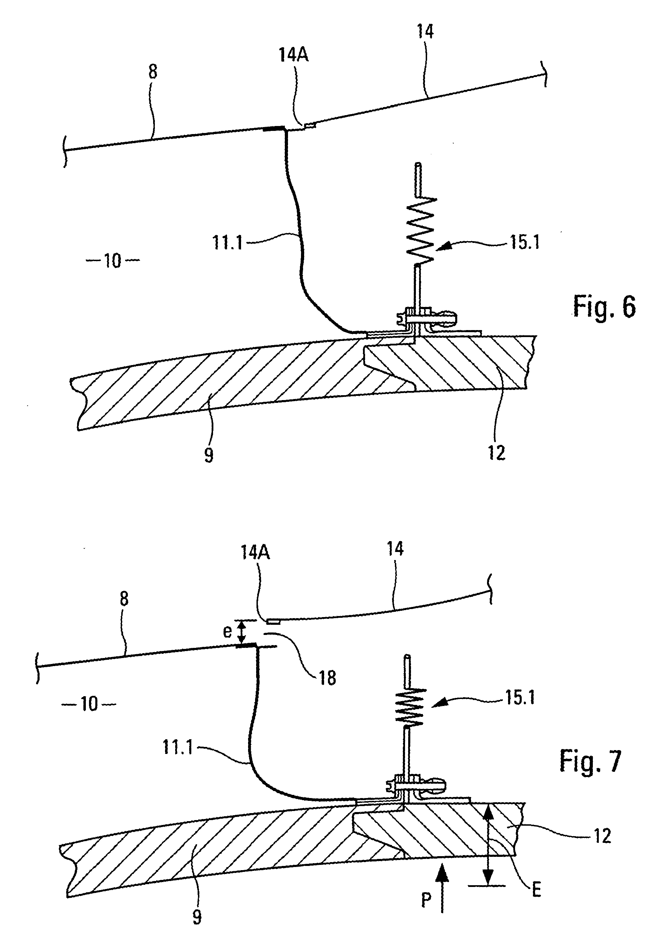

Pour remédier à cet inconvénient, dans le mode de réalisation de la présente invention illustré schématiquement par les figures 6 et 7, on met en oeuvre une attache avant 15.1 et une cloison annulaire 11.1 (remplaçant respectivement l'attache avant 15 et la cloison annulaire 11 décrites ci-dessus), présentant des flexibilités au moins approximativement semblables, transversalement à l'axe longitudinal L-L du turbomoteur 1. A cet effet, ladite cloison annulaire 11.1 peut être réalisée en une matière plastiquement déformable, telle que l'aluminium, alors que l'attache avant 15.1 peut être du type bielle à ressort ou dispositif analogue. La flexibilité radiale de la cloison annulaire 11.1, au lieu d'être due à la matière constitutive de celle-ci, pourrait provenir d'une toute autre cause, telle que conformation avec pli(s) concentrique(s), réalisation en plusieurs parties rigides reliées entre elles par des moyens flexibles ou cassables, etc ...

Ainsi, lorsqu'une pale 3A brisée percute le carter de soufflante 12 (flèche P sur la figure 6), les flexibilités de la cloison annulaire 11.1 et de l'attache avant 15.1 absorbent, sinon la totalité, du moins la plus grande partie de l'énergie de la percussion, de sorte que, au plus, il apparaît, entre le bord avant 14A de la pièce de carénage 14 et le capot externe d'entrée d'air 8 (voir la figure 7), une petite fente 18, de faible largeur e, n'influençant que peu les performances de l'aéronef, bien que le carter 12 se déforme de la hauteur importante E.

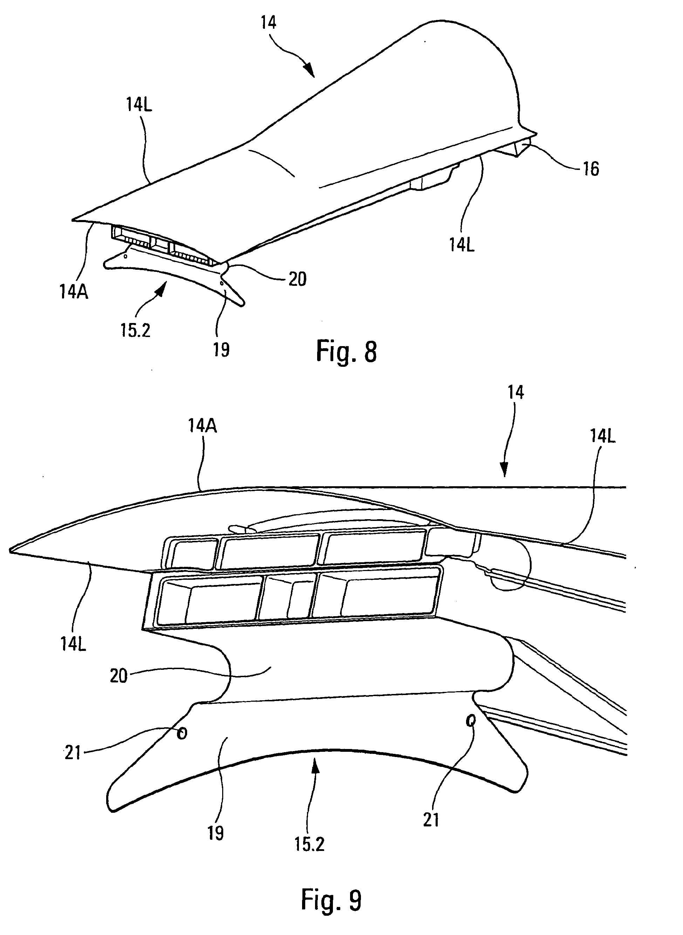

Sur les figures 8 et 9, on a illustré un mode de réalisation préféré 15.2, différent du mode de réalisation 15.1, pour ladite attache avant 15. Ce mode de réalisation 15.2 est constitué par une plaque de tôle ou analogue 19, solidaire de la pièce de carénage 14 et disposée transversalement à l'axe longitudinal L-L. La plaque 19 comporte au moins un pli transversal 20 disposé entre le carter de soufflante 12 et la pièce 14, lorsque cette dernière est fixée audit carter 12. A cet effet, ladite plaque 19 comporte des moyens de fixation 21.

## Revendications

1. Carénage (7) pour mât (6) de suspension d'un turbomoteur (1) à une aile d'aéronef (5), ledit turbomoteur (1) comportant :
- une entrée d'air tubulaire (2), entourée par un capot externe d'entrée d'air (8) ; et
- une soufflante (3), alimentée en air par ladite entrée d'air (2) et enfermée dans un carter de soufflante (12), lui-même entouré par un capot externe de soufflante (13) en continuité aérodynamique avec ledit capot externe d'entrée d'air (8),
et ledit carénage (7) de mât de suspension ayant une pièce antérieure (14) qui :
■ est disposée en regard de la partie supérieure dudit carter de soufflante (12),
■ présente la forme au moins approximative d'une gouttière renversée taillée en sifflet,
■ est latéralement raccordée audit capot externe de soufflante (13) de façon que son extrémité avant (14A) vienne affleurer ledit capot externe d'entrée d'air (8), et
■ est fixée audit carter de soufflante (12) par une attache avant (15.1, 15.2) et par une attache arrière (16), ladite attache arrière (16) étant relativement lâche pour absorber des tolérances,
**caractérisé en ce que** ladite attache avant (15.1, 15.2) est flexible dans la direction au moins approximativement radiale par rapport audit carter de soufflante (12).

2. Carénage selon la revendication 1,
**caractérisé en ce que** ladite attache avant (15.1) est du type bielle à ressort ou analogue.

3. Carénage selon la revendication 1,
**caractérisé en ce que** ladite attache avant (15.1) est une bielle réalisée en une matière plastiquement ou élastiquement déformablè.

4. Carénage selon la revendication 1,
**caractérisé en ce que** ladite attache avant (15.2) comporte une plaque de tôle ou de matière analogue, transversale par rapport audit carter de soufflante (12) et à ladite pièce antérieure de carénage (14) et **en ce que** ladite plaque comporte au moins un pli entre ledit carter de soufflante (12) et ladite pièce antérieure de carénage (14).

5. Carénage selon l'une quelconque des revendications 1 à 4, pour un turbomoteur (1) dont ladite entrée d'air tubulaire (2) comporte une paroi interne (9) définissant avec ledit capot externe d'entrée d'air (8) une chambre (10) obturée, du côté de ladite soufflante (3), par une cloison arrière annulaire (11) reliant ladite paroi interne (9) et ledit capot externe d'entrée d'air (8),
**caractérisé en ce que** ladite cloison arrière (11) présente une flexibilité radiale.

6. Carénage selon la revendication 5,
**caractérisé en ce que** la flexibilité radiale de ladite attache avant (15.1, 15.2) et la flexibilité radiale de ladite cloison arrière (11) sont au moins approximativement égales.

7. Carénage selon l'une des revendications 5 ou 6,
**caractérisé en ce que** ladite cloison arrière (11) est réalisée en une matière plastiquement déformable.

8. Carénage selon l'une des revendications 4 à 7,
**caractérisé en ce que** ladite attache avant (15.2) est solidaire de ladite pièce antérieure de carénage (14) et comporte des moyens (21) pour sa fixation audit carter de soufflante (12).

## Claims

1. Fairing (7) for a pylon (6) via which a turbine engine (1) is suspended from an aircraft wing (5), said turbine engine (1) comprising:
- a tubular air intake (2) surrounded by an air intake external cowl (8); and
- a fan (3), supplied with air by said air intake (2) and enclosed in a fan casing (12), itself surrounded by an external fan cowl (13) in aerodynamic continuity with said air intake external cowl (8),
and said suspension pylon fairing (7) having an anterior part (14) which:
• is positioned facing the upper part of said fan casing (12),
• has the at least approximate shape of an inverted channel section cut into a whistle shape,
• is laterally connected to said external fan cowl (13) in such a way that its front end (14A) lies flush with said air intake external cowl (8), and
• is fastened to said fan casing (12) via a front fixing (15.1, 15.2) and via a rear fixing (16), said rear fixing (16) being relatively loose in order to absorb tolerances,
**characterized in that** said front fixing (15.1, 15.2) is flexible in the at least approximately radial direction with respect to said fan casing (12).

2. Fairing according to Claim 1,
**characterized in that** said front fixing (15.1) is of the spring link or similar type.

3. Fairing according to Claim 1,
**characterized in that** said front fixing (15.1) is a link made of a plastically or elastically deformable material.

4. Fairing according to Claim 1,
**characterized in that** said front fixing (15.2) comprises a sheet of sheet metal or similar material, that is transverse with respect to said fan casing (12) and with respect to said fairing anterior part (14), and **in that** said sheet has at least one bend between said fan casing (12) and said fairing anterior part (14).

5. Fairing according to any one of Claims 1 to 4, for a turbine engine (1) the tubular air intake (2) of which comprises an internal wall (9) defining, with said air intake external cowl (8), a chamber (10) that is closed off, at said fan (3) end, by an annular rear partition (11) connecting said internal wall (9) and said air intake external cowl (8),
**characterized in that** said rear partition (11) has radial flexibility.

6. Fairing according to Claim 5,
**characterized in that** the radial flexibility of said front fixing (15.1, 15.2) and the radial flexibility of said rear partition (11) are at least approximately equal.

7. Fairing according to one of Claims 5 or 6,
**characterized in that** said rear partition (11) is made of a plastically deformable material.

8. Fairing according to one of Claims 4 to 7,
**characterized in that** said front fixing (15.2) is secured to said fairing anterior part (14) and comprises means (21) of fastening it to said fan casing (12).

## Patentansprüche

1. Verkleidung (7) für einen Pylon (6) zur Aufhängung eines Triebwerks (1) an einem Flugzeugflügel (5), wobei das Triebwerk (1) Folgendes umfasst:
- einen von einer äußeren Lufteinlasshaube (8) umgebenen röhrenförmigen Lufteinlass (2), und
- ein Gebläse (3), das durch den Lufteinlass (2) mit Luft versorgt wird und das von einem Gebläsegehäuse (12) umschlossen ist, das selbst von einer äußeren Gebläsehaube (13) umgeben ist, die in aerodynamischer Kontinuität mit der äußeren Lufteinlasshaube (8) steht,
und wobei die Verkleidung (7) des Triebwerkspylons einen vorderseitigen Teil (14) aufweist, der:
• dem oberen Teil des Gebläsegehäuses (12) gegenüberliegend angeordnet ist,
• zumindest annähernd die Form einer schräg geschnittenen umgekehrten Dachrinne aufweist,
• derart seitlich mit der äußeren Gebläsehaube (13) verbunden ist, dass sein vorderes Ende (14A) bündig mit der äußeren Lufteinlasshaube (8) abschließt, und
• an dem Gebläsegehäuse (12) durch eine vordere Befestigung (15.1,15.2) und durch eine hintere Befestigung (16) befestigt ist, wobei die hintere Befestigung (16) relativ spannungslos ist, um Toleranzen aufzunehmen,
**dadurch gekennzeichnet, dass** die vordere Befestigung (15.1,15.2) in zumindest annähernd radialer Richtung bezogen auf das Gebläsegehäuse (12) flexibel ist.

2. Verkleidung nach Anspruch 1,
**dadurch gekennzeichnet, dass** die vordere Befestigung (15.1) als eine Art Federstange oder dergleichen ausgestaltet ist.

3. Verkleidung nach Anspruch 1,
**dadurch gekennzeichnet, dass** die vordere Befestigung (15.1) eine aus einem plastisch oder elastisch verformbaren Material hergestellte Stange ist.

4. Verkleidung nach Anspruch 1,
**dadurch gekennzeichnet, dass** die vordere Befestigung (15.2) eine Platte aus Blech oder einem ähnlichen Material umfasst, die bezogen auf das Gebläsegehäuse (12) und den vorderseitigen Teil der Verkleidung (14) in Querrichtung verläuft und **dadurch**, dass die Platte mindestens einen Falz zwischen dem Gebläsegehäuse (12) und dem vorderseitigen Teil der Verkleidung (14) umfasst.

5. Verkleidung nach einem der Ansprüche 1 bis 4 für ein Triebwerk (1), dessen röhrenförmiger Lufteinlass (2) eine Innenwandung (9) umfasst, die mit der äußeren Lufteinlasshaube (8) eine Kammer (10) definiert, die auf der Seite des Gebläses (3) durch eine ringförmige hintere Trennwand (11) verschlossen ist, welche die Innenwandung (9) und die äußere Lufteinlasshaube (8) verbindet,
**dadurch gekennzeichnet, dass** die hintere Trennwand (11) radialflexibel ist.

6. Verkleidung nach Anspruch 5,
**dadurch gekennzeichnet, dass** die Radialflexibilität der vorderen Befestigung (15.1,15.2) und die Radialflexibilität der hinteren Trennwand (11) zumindest annähernd gleich sind.

7. Verkleidung nach Anspruch 5 oder 6,
**dadurch gekennzeichnet, dass** die hintere Trennwand (11) aus einem plastisch verformbaren Material hergestellt ist.

8. Verkleidung nach einem der Ansprüche 4 bis 7,
**dadurch gekennzeichnet, dass** die vordere Befestigung (15.2) fest mit dem vorderseitigen Teil der Verkleidung (14) verbunden ist und Mittel (21) zu ihrer Befestigung an dem Gebläsegehäuse (12) umfasst.
